# EUROPEAN PATENT SPECIFICATION

(11) **EP 4 264 095 B1**
(45) Date of publication and mention of the grant of the patent: **29.01.2025**
(21) Application number: 21854775.0
(22) Date of filing: 17.12.2021
(51) Int. Cl.: F16K 17/16, F16K 24/00, H01M 50/308, H01M 50/342, H01M 50/35, H01M 50/30

(54) **ADDITIVE MANUFACTURING OF AN ENCLOSED VENTILATION FILTER**
GENERATIVE FERTIGUNG EINES GESCHLOSSENEN BELÜFTUNGSFILTERS
FABRICATION ADDITIVE D'UN FILTRE DE VENTILATION FERMÉ

(30) Priority: 17.12.2020 US 202063127071 P
(43) Date of publication of application: 25.10.2023
(73) Proprietor: Donaldson Company, Inc., Bloomington, MN 55431 (US)
(72) Inventor: SUTHAR, Anil, Bloomington, Minnesota 55431 (US); WIDDEL, Jeffery T., Bloomington, Minnesota 55431 (US); SANDERS, Jacob L., Bloomington, Minnesota 55431 (US); RAHMATHULLAH, Aflal, Bloomington, Minnesota 55431 (US); BOYAT, Alexandra M., Bloomington, Minnesota 55431 (US); GOERTZ, Matthew P., Bloomington, Minnesota 55431 (US); YODER, Mikayla A., Bloomington, Minnesota 55431 (US); LAUER, David D., Bloomington, Minnesota 55431 (US); MORAVEC, Davis B., Bloomington, Minnesota 55431 (US)
(74) Representative: Eisenführ Speiser
(86) International application number: PCT/US2021/064025
(87) International publication number: WO 2022/133208

(56) References cited:
- DE-U1- 202012 011 795
- JP-U- S49 133 122
- US-A1- 2020 246 729

## Description

This application is being filed as a PCT International Patent application on December 17, 2021 in the name of Donaldson Company, Inc., a U.S. national corporation, applicant for the designation of all countries, and Jeffery T. Widdel, a citizen of the U.S., Jacob L. Sanders, a citizen of the U.S., Aflal Rahmathullah, a citizen of the U.S., Alexandra M. Boyat, a citizen of the U.S., Matthew P. Goertz, a citizen of the U.S., Mikayla A. Yoder, a citizen of the U.S., David D. Lauer, a citizen of the U.S. and Davis B. Moravec, a citizen of the U.S., applicants and inventors for the designation of all countries, and Anil Suthar, a citizen of the U.S., inventor for the designation of all countries, and claims priority to U.S. Provisional Patent Application No. 63/127,071, filed December 17, 2020.

### Field

Embodiments herein relate to three-dimensional (3D) printing of a vent. More specifically, the embodiments herein relate to 3D printing of a vent and vent media during a 3d printing process.

### Background

Protective vent components can be manufactured using an injection molding process to create component parts that can then be used as features of a greater vent assembly. The protective vent components produced by injection molding can then undergo further processing, such as incorporating a vent media, such as those that can include a water, dust, and oil resistant membrane that allow gas pressures to equalize while preventing liquid and solid contaminants to pass through. Additional structures can be added to vent components following the injection molding processing, such as the inclusion of various adhesives, sealants, sealing rings, and the like.

The injection molding process has limited utility for generating a vent component and a vent media in the same process. In addition, fine feature details having high aspect ratio structures are not easily manufacturing using an injection molding process due to less flexibility in the placement of those having delicate size and shape.

DE 20 2012 011795 U1 relates to a ventilation element according to the preamble of claim 1, which has a base structure with a portion for securing the base structure to a battery casing. The exchange of gas is enabled by the base structure through a passage. A gas permeable membrane provided in the passage bursts upon the occurrence of an excessive pressure differential.

JP S49 133122 U shows a microporous filter placed via an annular packing in a main body having a cutout portion formed in a part of the peripheral wall, and a cap having an inverted L-shaped hanging wall with a notch formed in an outer part of the L-shaped hanging wall is fitted into an upper end opening of the main body, and an exhaust passage is formed by the cutout recess of the main body and the inverted L-shaped hanging wall of the cap fitted into the cutout recess.

US 2020/246729 A1 relates to a method which includes providing a computer-readable three-dimensional model of a filter medium including a plurality of segments, each segment of the three-dimensional model being configured to be converted into a plurality of slices that each define a cross-sectional layer of the filter medium, the filter medium including a first end defining a first cavity that extends from the first end along a predetermined direction that defines an undercut along the first predetermined direction; and successively forming each layer of the filter medium by additive manufacturing.

### Summary

In a first aspect, the invention relates to a vent assembly according to the subject-matter of claim 1.

According to a preferred embodiment, the screen structure defines: a first row of first open areas, at least a portion of the first open areas having a first dimension, a second row of second open areas, at least a portion of the second open areas having a second dimension different from the first dimension, and a third row of third open areas, at least a portion of the third open areas having a third dimension different from the first and second dimension.

Preferably, the first dimension, second dimension and third dimension can be a height of the open area.

In addition, the screen structure defines rows of repeating patterns of open areas, wherein the open areas can be shaped as rectangles, circles, hexagons, or triangles.

Preferably, the screen structure includes a grid of divider elements can include horizontal dividers and vertical dividers.

According to a preferred embodiment, the vent media can be a membrane, wherein the membrane can be welded to a membrane seat surface.

Preferably, the vent media can have a porosity of 0.3 µm to 3 µm.

In addition, the vent media and at least portions of the housing can be formed by a 3D printing process.

In a second aspect, the invention relates to methods for forming a vent assembly according to the subject-matters of claim 9.

According to a preferred embodiment, the method for forming a vent assembly can further include: forming, after attaching the membrane, an end cap portion using the additive manufacturing process at the first end of the body sub-assembly to form the vent assembly, wherein the vent assembly defines a window at the first end wherein the window can be in fluid communication with the cavity.

Preferably, a method for forming a vent assembly can further include: attaching an end cap to the body sub-assembly wherein the vent assembly defines a window at the first end wherein the window can be in fluid communication with the cavity.

In addition, in the method for forming a vent assembly, attaching the membrane includes heat welding, ultrasonic welding, or adhesive bonding.

In a third aspect, the invention relates to methods for forming a vent assembly according to the subject-matters of claim 12.

According to a preferred embodiment, the method of forming a vent assembly can further include: forming, after forming the breathable vent, an end cap portion using the 3D printing process at the first end of the body sub-assembly to form the vent assembly, wherein the vent assembly defines a window at the first end wherein the window can be in fluid communication with the cavity.

Preferably, the method of forming a vent assembly can further include: attaching, after forming the breathable vent, an end cap at the first end of the body sub-assembly to form the vent assembly, wherein the vent assembly defines a window at the first end wherein the window can be in fluid communication with the cavity.

In addition, the breathable vent can have a porosity of 0.3 µm to 3 µm. According to a preferred embodiment, the breathable vent can have a first porosity and the body sub-assembly can have a second porosity, wherein the first porosity can be higher than the second porosity.

Preferably, the method of forming a vent assembly can further include: attaching a seal structure to the vent assembly.

In addition, the method of forming a vent assembly can further include: attaching the vent assembly to a larger assembly.

According to a preferred embodiment, the vent assembly further includes a first overhang structure extending from a first side toward a second side of the vent assembly part way over the membrane or breathable vent and a second overhang structure extending from the second side toward the first side of the vent assembly, wherein the first and second overhang structures define a flow path from an exterior of the vent assembly to the membrane or breathable vent, the flow path includes turns forming angles of 60-90 degrees.

This summary is an overview of some of die teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope herein is defined by the appended claims and their legal equivalents.

### Brief Description of the Figures

Aspects may be more completely understood in connection with the following figures (FIGS.), in which:
FIG. 1 is a schematic perspective view of printed vent in accordance with various embodiments herein.
FIG. 2 is a cross-sectional view of the printed vent of FIG. 1 along line 2-2' in accordance with various embodiments herein.
FIG. 3 is a side plan view of a screen structure in accordance with various embodiments herein.
FIG. 4 is a schematic diagram of fluid flow pathway in accordance with various embodiments herein.
FIG. 5 is a schematic diagram of fluid flow pathway in accordance with various embodiments herein.
FIG. 6 is a schematic diagram of fluid flow pathway in accordance with various embodiments herein.
FIG. 7 is a schematic diagram of fluid flow pathway in accordance with various embodiments herein.

While embodiments are susceptible to various modifications and alternative forms, specifics thereof have been shown by way of example and drawings, and will be described in detail. It should be understood, however, that the scope herein is not limited to the particular aspects described. On the contrary, the intention is to cover modifications, equivalents, and alternatives falling within the spirit and scope herein.

### Detailed Description

The process of additive manufacturing, also referred to herein as three-dimensional printing (3D printing), can be a useful tool in the manufacture of protective vent components. The 3D printing process offers the advantage of printing vent housing structures as well as vent media, all using the same processing method. Importantly, the 3D printing process can be utilized to deposit a vent media on a vent housing component during the same manufacturing method. The 3D printing of a vent media provides an advantage that less useable material is required, and fewer processing steps are needed. The 3D printing method can also provide high degrees of flexibility in printing of complex geometries and features that are normally difficult to achieve using injection molding techniques. Particular complex geometries can include fine feature details useful for dispersing the flow of a fluid exiting or entering the cavity of a vent and to prevent blockage of a vent media.

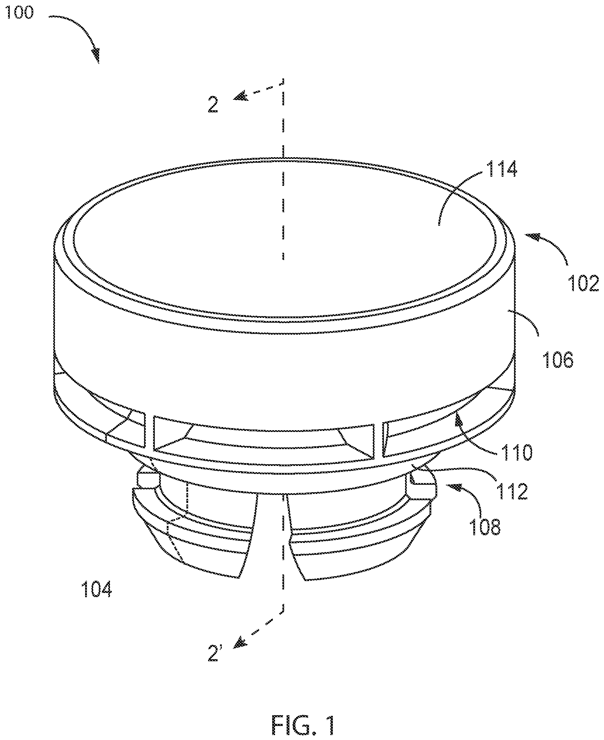

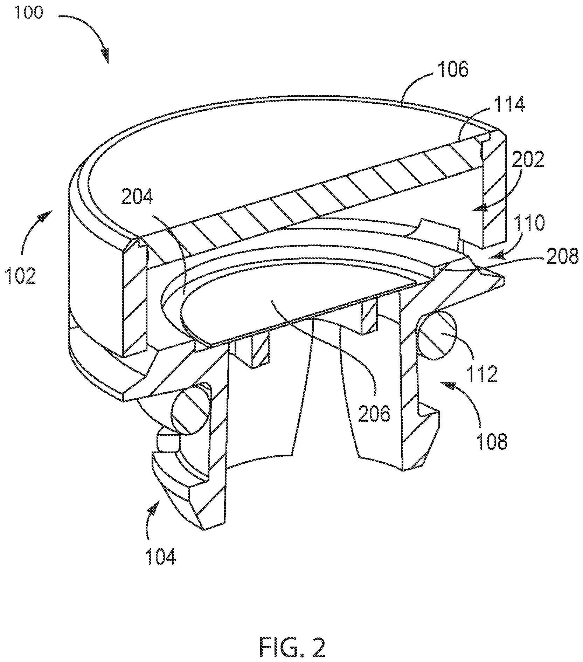

In one embodiment, a vent body of a vent assembly is printed using 3D printing using a low porosity material and a membrane having a high porosity is sealed to a seal surface of the vent body. Referring now to FIG. 1, a perspective view of an exemplary vent 100 is shown in accordance with the embodiments herein. FIG. 2 is a cross-sectional perspective view of the vent 100 of FIG. 1 along line 2-2'. The vent 100 includes a vent housing 106 having a first end 102 and a second end 104. The vent 100 includes an end cap 114 coupled to the vent housing 106 toward the first end 102, and a seal 112 and a coupling structure 108 toward the second end. The vent housing 106 can be formed from a thermoplastic polymer during a 3D printing process. In some embodiments, the vent housing 106 can be formed from a thermoplastic, a thermoset polymer, an elastomeric polymer, and derivatives, copolymers, or various combinations thereof.

The vent housing 106 is configured to house a vent media 206, where the vent media 206 is coupled to a mounting surface 204 with an adhesive or other affixing material. The vent housing 106 defines a cavity 202. An end cap 1 14 is coupled to the vent housing 106 towards the first end 102. The end cap 1 14 can form a unitary component with the vent housing 106. or it can be a separate component in other embodiments.

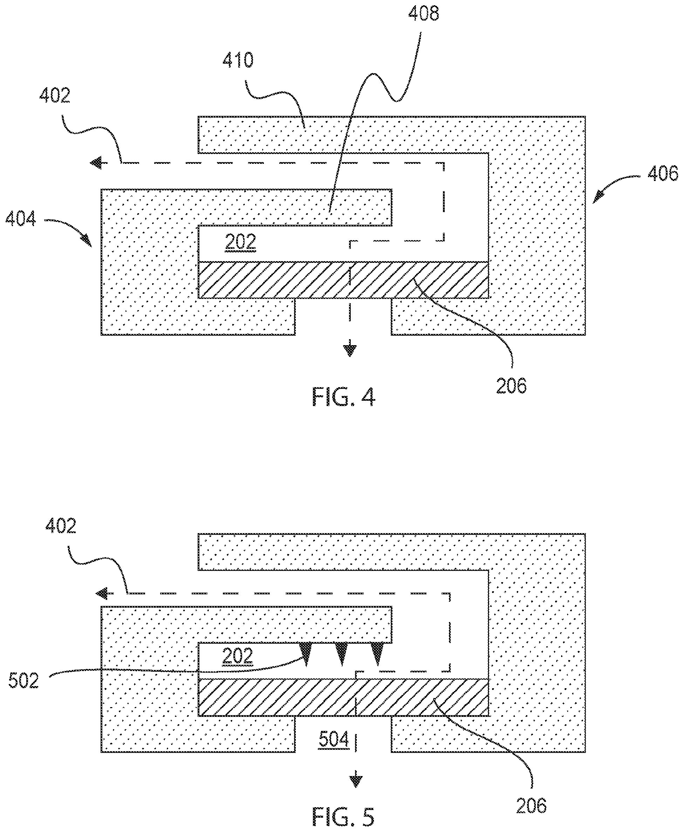

Vent housing 106 defines a window 110 at the first end 102 that is in fluid communication with the cavity 202 and an exterior of the vent 100 to define a first fluid flow pathway between the outside of the vent housing 106 and the mounting surface 204 and/or the vent media 206. The window 110 includes a window perimeter. The vent housing 106 has an obstruction 208 positioned between the window 110 and the vent media 206. The obstruction 208 creates a tortuous path between the window 110 and the vent media 206, meaning that fluid flowing into the window 110 cannot directly impact the vent media 206. Features of the tortuous path will be discussed further in reference to FIGS. 4-8 below.

The windows disposed about the vent housing 106 can provide a gas flow pathway between an exterior of the vent 100 and the cavity 202. The window 110 can include a screen structure 300 that is positioned within the window 110. The screen structures can be incorporated into the body of the vent using a 3D printing process such that the window and screen structure are of unitary construction. The porous barriers structures herein can provide protection to the vent media 206 by providing a physical barrier preventing entry of a fluid into the cavity of the vent 100 and around the vent media 206 positioned therein. In various embodiments, the screen structures can also be configured to alter the wetting properties of the vent such that only a predetermined amount of a fluid is allowed to pass therethrough.

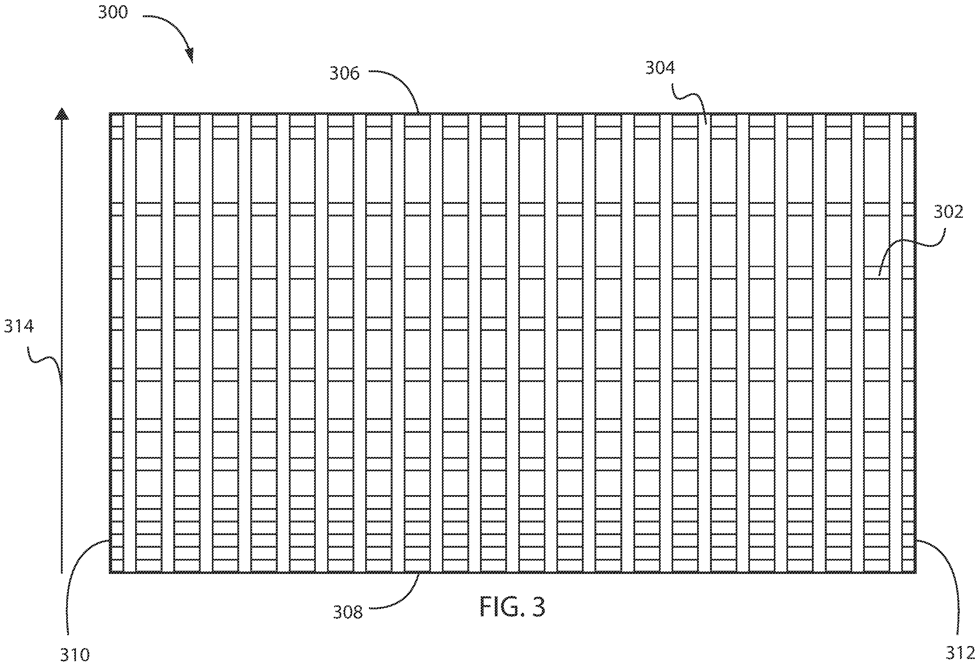

Referring now to FIG. 3, a schematic view of a screen structure 300 is shown in accordance with various embodiments herein. Screen structure 300 includes a plurality of horizontal bars 302 and vertical bars 304 to form a grid-like structure. The horizontal bars 302 are disposed in a horizontal fashion spanning a left side 310 and a right side 312 of the window 110. The vertical bars 304 are disposed in a vertical fashion spanning a top 306 and bottom 308 of the window 110. In the embodiment in FIG. 3, the plurality of horizontal bars 302 are disposed along a gradient 314 such that the density of horizontal bars 302 near the bottom 308 of window 110 is higher than the density of the horizontal bars 302 near the top 306 of window 110. The configuration of the screen structure 300 can act as a barrier to disperse the flow of a fluid exiting or entering the cavity of a vent as described herein. and thus can prevent blockage of the window 110.

It will be appreciated that other configurations are contemplated herein for the screen structure 300. The screen structure 300 can include a plurality of apertures defined by a patterned grid or mesh. In some embodiments, the patterned grid or mesh can include those having high aspect ratio features, such that have fine structural detail, as described elsewhere herein. The pattern of the grid or mesh incorporated into the screen structure 300 can include many configurations, where the porous portion can assume many shapes, including, but not to be limited to, circles, spheres, rectangles, squares, triangles, hexagons, pentagons, rhombus, etc. in some embodiments, the apertures can be distributed evenly across a length (from a left side to a right side of a window) or height (from a top to a bottom of a window).

In various embodiments, the apertures can be distributed along a gradient in one or more directions across a length or height of a window. In other embodiments, the apertures can have a uniform shape and size, while in other embodiments the apertures can have a non-uniform shape and size. The pattern of the grid or mesh can also incorporate aesthetic or practical designs therein, including, but not to be limited to, marketing logos, product identification numbers, images, and the like.

The vent housing 106 can define a tortuous flow path defining a fluid flow channel through which fluid flowing into the window 110 cannot directly impact the vent media 206. FIGS. 4-8 include various embodiments for a tortuous path defined by the vent housing as described herein. Referring now to FIG. 4, a schematic representation of a vent including a tortuous flow path is shown in accordance with various embodiments herein. The tortuous flow path 402 defined by the vent housing 106 can include a first overhang structure 408 extending from a first side 404 of the vent housing toward a second side 406 of the vent housing. The tortuous flow path 402 is also defined by second overhang structure 410 extending from the second side 406 toward the first side 404 of the vent housing. The first overhang structure 408 and second overhang structure 410 together define a tortuous flow path 402 from an exterior of the vent housing to the membrane or breathable vent within the cavity 202, wherein the flow path includes turns forming angles of from 60-90 degrees. It will be appreciated that the flow path can also include turns forming angles of from 0-60 degrees. The tortuous flow path can prevent fluid from entering into a cavity 202 and encountering the surface of the vent media disposed therein.

Referring now to FIG. 5, a schematic representation of a vent including a tortuous flow path as described in FIG. 4, is shown further including various surface modifications in accordance with various embodiments herein. The tortuous flow path 402 can further include one or more pressure release structures 502 included on a surface opposing the vent media 206 to provide a point of release in the event a large amount of pressure builds on the opposing vent media side 504 exterior to the cavity. Pressure release structures 502 can include those shaped as pins, pyramids, rectangles, triangles, and the like. The pressure release structures 502 are configured such that when the pressure release structures contact the vent media 206, the contact force causes the vent media 206 to puncture and thereby release any pressure build up on vent media side 504.

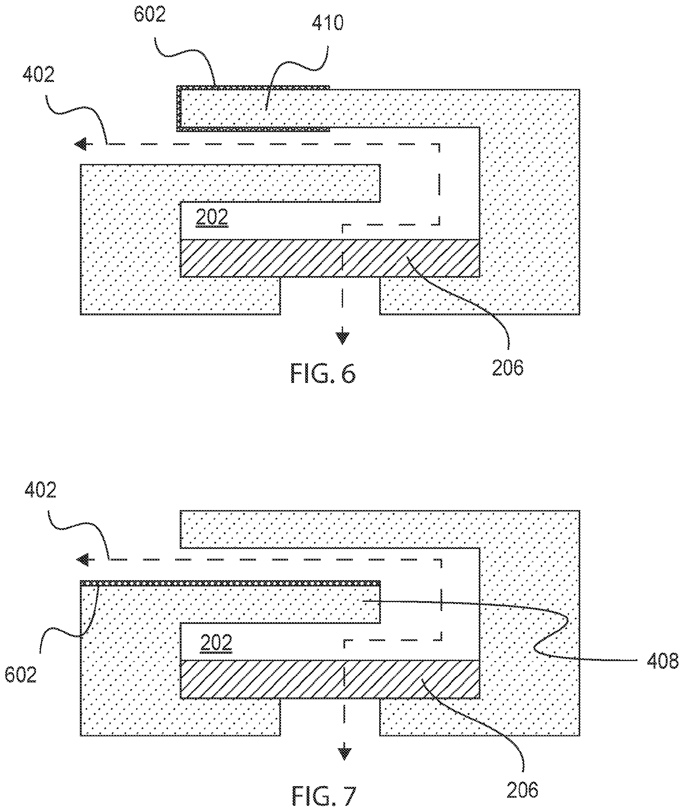

It will be appreciated that the overhang structures and other surface portions of the tortuous flow path can be coated with various treatments to repel a fluid from entering the tortuous flow path. Referring now to FIG. 6, a schematic representation of a vent including a tortuous flow path 402 is shown in accordance with various embodiments herein. The second overhang structure 410 includes a treatment material 602 disposed about the end of the second overhang structure 410 such that it coats and exterior portion of the second overhang structure 410. Treatment material 602 can include any material that can repel a fluid of interest from entering into the cavity 202, including, but not to be limited to treatment materials including hydrophobic materials, oleophobic materials, and the like. Referring now to FIG. 7, a schematic representation of a vent including a tortuous flow path 402 is shown in accordance with various embodiments herein. The first overhang structure 408 includes a treatment material 602 disposed thereon on a surface within the tortuous flow path.

The treatment material can include an oleophobic treatment, such that the microporous membrane repels oil. An oleophobic treatment can also encourage roll-off of liquids that come into contact with the microporous membrane such as aqueous urea. As such, an oleophobic treatment can increase vent life and reduce pore blockages in the microporous membrane that could result from liquid contact with the microporous membrane.

Parts of other vent assemblies described herein, including the vent assembly described with respect to FIGS. 1-2, can also include treatment material at various locations. Parts of other vent assemblies described herein, including the vent assembly described with respect to FIGS. 1-2, can also include pressure release structures.

### 3D Printing Process

The 3D structures described herein can be formed using the process of additive manufacturing, referred to herein as three-dimensional (3D) printing. As used herein, the terms "three-dimensional printing" ("3D printing") and "additive manufacturing" shall be used interchangeably. The 3D structures generated using 3D printing can include unique and fine structural detail, including those having a high aspect ratio. The fine features incorporated into the 3D structures described herein can include, but is not to be limited to, pillars, fins, intersecting fins, a honeycomb pore structure having a varying distribution of varying pore sizes, a honeycomb pore structure having a uniform distribution of uniform pores sizes, fine struts, fine mesh structures, a gradient pore structures throughout the material, threads, ridges, open cavities, central apertures, and the like. In various embodiments, the 3D structures can be 3D printed to be or to include portions that are highly porous. In other embodiments, the 3D printing process can mix various materials to generate the 3D structures.

In one embodiment, the entire vent body is printed using 3D printing using a low porosity material and a membrane having a high porosity is sealed to the vent body.

It will be appreciated that while the vent housing can be formed from a unitary construction during the 3D printing process, various additional steps may need to be taken to include features not generated by the same 3D printing process that is used to manufacture the vent housing. By way of example, various structures can be added to the vent housing after the 3D printing process, including components such as adding seals, vent caps, vent media, and the like.

### Gradient Structures

The precise control offered by additive manufacturing methods and ability to vary the material being added to the structure at each location enable the 3D structure to have gradients of size, such as gradients of height of repeating structures, gradients of width of repeating structures, gradients of thickness of repeating structures, gradients of spacing of repeating structures, and gradients of shape of repeating structures. It is also possible to form gradients of material composition within the printed structure in any of the structure's dimensions.

Specific choices for variable spacing and gradient dimensions can be based on flow modeling to optimize pressure drop and loading.

### Porosity of the Printed Material

The printed material of a printed vent structure described herein can be porous, such as to allow fluid to flow through the structure. This porosity can be accomplished during the printing process by defining many and frequent open spaces interspersed with solid material portions. An example of a printed vent structure defining many four open areas is described herein. These open areas allow for fluid to flow through the structure.

In some embodiments, the open area of a printed vent structure can be greater than or equal to 50 %, 52 %, 55 %, 58 %, 60 %, 62 %, 65 %, 68 %, or 70 %. In some embodiments, the open area can be less than or equal to 85 %, 83 %, 81 %, 79 %, 78 %, 76 %, 74 %, 72 %, or 70 %. In some embodiments, the open area can fall within a range of 50 % to 85 %, or 52 % to 83 %, or 55 % to 81 %, or 58 % to 79 %, or 60 % to 78 %, or 62 % to 76 %, or 65 % to 74 %, or 68 % to 72 %, or can be about 70 %.

The analysis of percent open area can be performed by taking a photograph of the printed vent and counting up open pixels vs. total pixels. The analysis can be performed on an outer perimeter of a printed vent. Alternatively, if the printed vent defines a center aperture, the analysis of percent open area can analyzed based on the area between the center aperture and an outer perimeter of the printed vent.

Another way that porosity can also be accomplished is by choosing material for the structure that is itself porous or can be modified after printing to be porous. Some 3D printing materials incorporate particles, such as spheres, of thermoplastic material of a different type than the remainder of the material. These particles can be partially cured and dissolved out of the structure after printing. Another option is to selectively bake or etch away particles that are included in the materials of the structure. These processes result in void spaces within the printed materials, increasing the porosity of the material.

For the purpose of this disclosure, the term "pore size" refers to spaces formed by materials within a printed structure. The pore size of the media can be and estimated by reviewing electron photographs of the media. The average pore size of a media can also be calculated using a Capillary Flow Porometer having model no. APP 1200 AEXSC available from Porous Materials Inc. of Ithaca, NY.

In the context of filtration assemblies used for gas separation, in some embodiments, the average pore size for the printed material can be greater than or equal to 0.3 nanometers, 0.6 nanometers, 0.9 nanometers, 1.2 nanometers, or 1.5 nanometers. In some embodiments, the average pore size can be less than or equal to 3.0 nanometers, 2.6 nanometers, 2.2 nanometers, 1.9 nanometers, or 1.5 nanometers. In some embodiments, the average pore size can fall within a range of 0.3 nanometers to 3.0 nanometers, or 0.6 nanometers to 2.6 nanometers, or 0.9 nanometers to 2.2 nanometers, or 1.2 nanometers to 1.9 nanometers, or can be about 1.5 nanometers.

In other filtration contexts where preservation of the permeability of an existing media is a priority, such as ePTFE, in some embodiments, the average pore size can be greater than or equal to 0.1 microns, 0.2 microns, 0.4 microns, 0.5 microns, 0.7 microns, 0.8 microns, 0.9 microns, 1.1 microns, 1.2 microns, 1.4 microns, or 1.5 microns. In some embodiments, the average pore size can be less than or equal to 3.0 microns, 2.8 microns, 2.7 microns, 2.6 microns, 2.4 microns, 2.2 microns. 2.1 microns, 2.0 microns, 1.8 microns, 1.6 microns, or 1.5 microns. In some embodiments, the average pore size can fall within a range of 0.1 microns to 3.0 microns, or 0.2 microns to 2.8 microns, or 0.4 microns to 2.7 microns, or 0.5 microns to 2.6 microns, or 0.7 microns to 2.4 microns, or 0.8 microns to 2.2 microns, or 0.9 microns to 2.1 microns, or 1.1 microns to 2.0 microns, or 1.2 microns to 1.8 microns, or 1.4 microns to 1.6 microns, or can be about 1.5 microns.

In other filtration contexts such as the semiconductor fields, where preservation of the permeability of an existing media is a priority, in some embodiments, the average pore size can be greater than or equal to 0.01 micrometers. 0.02 micrometers, 0.03 micrometers, 0.04 micrometers, or 0.05 micrometers, or can be an amount falling within a range between any of the foregoing.

In the context of filtration assemblies that use nonwoven composite materials, in some embodiments, the average pore size of the printed material can be greater than or equal to 15 microns, 17 microns, 18 microns, or 20 microns. In some embodiments, the average pore size can be less than or equal to 25 microns, 23 microns, 22 microns, or 20 microns. In some embodiments, the average pore size can fall within a range of 15 microns to 25 microns, or 17 microns to 23 microns, or 18 microns to 22 microns, or can be about 20 microns.

In the context of filtration media where it is important to minimize pressure drop, the average pore size of the printed material, in some embodiments, the average pore size can be greater than or equal to 0.5 mm, 0.6 mm, 0.7 mm, 0.8 mm, 0.9 mm, or 1.0 mm. In some embodiments, the average pore size can be less than or equal to 2.0 mm, 1.8 mm, 1.6 mm, 1.4 mm, 1.2 mm, or 1.0 mm. In some embodiments, the average pore size can fall within a range of 0.5 mm to 2.0 mm, or 0.6 mm to 1.8 mm, or 0.7 mm to 1.6 mm, or 0.8 mm to 1.4 mm, or 0.9 mm to 1.2 mm, or can be about 1.0 mm.

For the purpose of this disclosure, the term "pore size" refers to spaces formed by materials within a printed structure. The pore size of the media can be and estimated by reviewing electron photographs of the media. The average pore size of a media can also be calculated using a Capillary Flow Porometer having model no. APP 1200 AEXSC available from Porous Materials Inc. of Ithaca, NY.

### Vent Media

The vent media suitable for use in the vents described herein can include those that are suitable for use in the filtration of a fluid. The vent media can be constructed of a variety of different materials and combinations of materials. In various embodiments the vent media herein incorporate a breathable vent media, such as expanded polytetrafluoroethylene (ePTFE) or other types of breathable vent media. The vent media can be a laminate or composite that includes a breathable vent media, such as a ePTFE laminated to a woven or non-woven support layer. In some embodiments, the vent media is a woven fabric or a non-woven fabric. The vent media can be constructed of hydrophobic material, or the vent media can be treated to exhibit hydrophobic properties. In one example, the vent media is a hydrophobic woven or non-woven fabric.

In various embodiments, the vent media herein can be printed using the additive manufacturing process to incorporate the vent media directly into the printed vents. It will be appreciated that in some embodiments, additional steps may be required after an additive manufacturing process whereby the vent media are further secured to the vent housing by providing an additional adhesive or performing an additional welding process.

### Incorporation of Chemicals. Additives or Particles

Particles or additives can be added to the vent for many purposes, including to repel fluids, including specific fluids. Chemical treatments can be added during or after the manufacturing process to provide additional benefits including changing the contact angle of the surface of the material, and reducing dust adhesion.

Various additive can include, but are not to be limited to, nanoparticles including catalysts; absorptive materials such as carbon, metal organic frameworks (MOFs), and silica gels; chemical sensing indicators such as pH indicators and indicators for signaling vent failures.

It should be noted that, as used in this specification and the appended claims, the singular forms "a," "an," and "the" include plural referents unless the content clearly dictates otherwise, It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration. The phrase "configured" can be used interchangeably with other similar phrases such as arranged and configured, constructed and arranged, constructed, manufactured and arranged, and the like.

All publications and patent applications in this specification are indicative of the level of ordinary skill in the art to which this invention pertains.

As used herein, the recitation of numerical ranges by endpoints shall include all numbers subsumed within that range (e.g., 2 to 8 includes 2.1, 2.8.5.3. 7, etc.).

The headings used herein shall not be viewed to limit or characterize the invention(s) set out in any claims that may issue from this disclosure. As an example, although the headings refer to a "Field," such claims should not be limited by the language chosen under this heading to describe the so-called technical field. Further, a description of a technology in the "Background" is not an admission that technology is prior art to any invention(s) in this disclosure. Neither is the "Summary" to be considered as a characterization of the invention(s) set forth in issued claims.

The embodiments described herein are not intended to be exhaustive or to limit the invention to the precise forms disclosed in the following detailed description. Rather, the embodiments are chosen and described so that others skilled in the art can appreciate and understand the principles and practices. As such, aspects have been described with reference to various specific and preferred embodiments and techniques. However, it should be understood that many variations and modifications may be made while remaining within the scope of the invention as defined by the appended claims.

## Claims

1. A vent assembly comprising:
a housing (106) defining a cavity (202), a first end (102) and a second end (104), wherein the second end (104) comprises a coupling structure (108), wherein the first end (102) defines a window (110) in fluid communication with the cavity, wherein the window (110) has a window perimeter;
a vent media (206) spanning the cavity (202) of the housing (106), wherein the vent media (206) is breathable and forms a watertight seal to the housing (106) at a perimeter of the vent media (206);
**characterized in that** the first end (102) comprises a screen structure (300) within the window perimeter of the window (110) comprising repeating structures defining open areas.

2. The vent assembly of claim 1, wherein the screen structure (300) defines:
a first row of first open areas, at least a portion of the first open areas having a first dimension;
a second row of second open areas, at least a portion of the second open areas having a second dimension different from the first dimension; and
a third row of third open areas, at least a portion of the third open areas having a third dimension different from the first and second dimension.

3. The vent assembly of claim 2, wherein the first dimension, second dimension and third dimension are a height of the respective open areas.

4. The vent assembly of any of claims 1-3, wherein the screen structure (300) defines rows of repeating patterns of open areas, wherein the open areas are shaped as rectangles, circles, hexagons, or triangles.

5. The vent assembly of any of claims 14, wherein the screen structure (300) comprises a grid of divider elements comprising horizontal dividers and vertical dividers.

6. The vent assembly of any of claims 1-5, wherein the vent media (206) is a membrane, wherein the membrane is welded to a membrane seat surface.

7. The vent assembly of any of claims 1-6, wherein the vent media (206) has a porosity of 0.3 µm to 3 µm.

8. The vent assembly of any of claims 1-7, wherein the vent media (206) and at least portions of the housing (106) are formed by a 3D printing process.

9. A method for forming a vent assembly according to any of claims 1-8, comprising:
forming a body sub-assembly using an additive manufacturing process, wherein the body sub-assembly comprises a first end (102), a second end (104) comprising a coupling structure (108), and a membrane seat surface, wherein the body sub-assembly defines a cavity (202) and the membrane seat surface surrounds the cavity (202); and
attaching a membrane to the membrane seat surface to form a watertight seal (112).

10. The method of claim 9, further comprising:
forming, after attaching the membrane, an end cap (114) portion using the additive manufacturing process at the first end (102) of the body sub-assembly to form the vent assembly, wherein the vent assembly defines a window (110) at the first end (102) wherein the window is in fluid communication with the cavity.

11. The method of any of claims 9-10, wherein attaching the membrane comprises heat welding, ultrasonic welding, or adhesive bonding.

12. A method for forming a vent assembly according to any of claims 1-8, comprising:
forming a body sub-assembly using a 3D printing process, wherein the body sub-assembly comprises a first end (102), a second end (104) comprising a coupling structure (108), wherein the body sub-assembly defines a cavity (202); and
forming a breathable vent on the body sub-assembly using the 3D printing process, wherein the breathable vent spans the cavity (202).

13. The method of claim 12, further comprising:
forming, after forming the breathable vent, an end cap (114) portion using the 3D printing process at the first end (102) of the body sub-assembly to form the vent assembly, wherein the vent assembly defines a window (110) at the first end (102) wherein the window (110) is in fluid communication with the cavity (202).

14. The method of any of claims 12-13, wherein the breathable vent has a first porosity and the body sub-assembly has a second porosity, wherein the first porosity is higher than the second porosity.

15. The method of any of claims 9-14 wherein the vent assembly further comprises:
a first overhang structure (408) extending from a first side (404) toward a second side (406) of the vent assembly part way over the membrane or breathable vent; and
a second overhang structure (410) extending from the second side toward the first side of the vent assembly;
wherein the first and second overhang structures (408, 410) define a flow path (402) from an exterior of the vent assembly to the membrane or breathable vent, wherein the flow path (402) comprises turns forming angles of 60-90 degrees.

## Patentansprüche

1. Eine Entlüftungs-Baugruppe, aufweisend:
ein Gehäuse (106), das einen Hohlraum (202), ein erstes Ende (102) und ein zweites Ende (104) definiert, wobei das zweite Ende (104) eine Kopplungsstruktur (108) umfasst, wobei das erste Ende (102) ein Fenster (110) definiert, das in Fluidverbindung mit dem Hohlraum ist, wobei das Fenster (110) einen Fensterumfang aufweist;
ein Entlüftungsmedium (206), das den Hohlraum (202) des Gehäuses (106) überspannt, wobei das Entlüftungsmedium (206) atmungsaktiv ist und an einem Umfang des Entlüftungsmediums (206) eine wasserdichte Abdichtung mit dem Gehäuse (106) bildet;
**dadurch gekennzeichnet, dass** das erste Ende (102) eine Siebstruktur (300) innerhalb des Fensterumfangs des Fensters (110) umfasst, die sich wiederholende Strukturen aufweist, die offene Bereiche definieren.

2. Die Entlüftungs-Baugruppe nach Anspruch 1, wobei die Siebstruktur (300) definiert:
eine erste Reihe erster offener Bereiche, wobei mindestens ein Teil der ersten offenen Bereiche eine erste Abmessung aufweist;
eine zweite Reihe zweiter offener Bereiche, wobei mindestens ein Teil der zweiten offenen Bereiche eine zweite Dimension aufweist, die sich von der ersten Dimension unterscheidet; und
eine dritte Reihe dritter offener Bereiche, wobei mindestens ein Teil der dritten offenen Bereiche eine dritte Dimension aufweist, die sich von der ersten und zweiten Dimension unterscheidet.

3. Die Entlüftungs-Baugruppe nach Anspruch 2, wobei die erste Abmessung, die zweite Abmessung und die dritte Abmessung eine Höhe der jeweiligen offenen Bereiche sind.

4. Die Entlüftungs-Baugruppe nach einem der Ansprüche 1 bis 3, wobei die Siebstruktur (300) Reihen von sich wiederholenden Mustern von offenen Bereichen definiert, wobei die offenen Bereiche als Rechtecke, Kreise, Sechsecke oder Dreiecke geformt sind.

5. Die Entlüftungs-Baugruppe nach einem der Ansprüche 1 bis 4, wobei die Siebstruktur (300) ein Gitter aus Trennelementen mit horizontalen Trennwänden und vertikalen Trennwänden umfasst.

6. Die Entlüftungs-Baugruppe nach einem der Ansprüche 1 bis 5, wobei das Entlüftungsmedium (206) eine Membran ist und die Membran mit einer Membransitzfläche verschweißt ist.

7. Die Entlüftungs-Baugruppe nach einem der Ansprüche 1 bis 6, wobei das Entlüftungsmedium (206) eine Porosität von 0,3 µm bis 3 µm aufweist.

8. Die Entlüftungs-Baugruppe nach einem der Ansprüche 1-7, wobei das Entlüftungsmedium (206) und zumindest Teile des Gehäuses (106) durch ein 3D-Druckverfahren geformt werden.

9. Verfahren zur Herstellung einer Entlüftungs-Baugruppe nach einem der Ansprüche 1-8, umfassend:
Bilden einer Körperunterbaugruppe unter Verwendung eines additiven Herstellungsprozesses, wobei die Körperunterbaugruppe ein erstes Ende (102), ein zweites Ende (104), das eine Kopplungsstruktur (108) umfasst, und eine Membransitzoberfläche aufweist, wobei die Körperunterbaugruppe einen Hohlraum (202) definiert und die Membransitzoberfläche den Hohlraum (202) umgibt; und
Anbringen einer Membrane an der Membransitzfläche zur Bildung einer wasserdichten Abdichtung (112).

10. Verfahren nach Anspruch 9 ferner aufweisend:
Ausbilden eines Endkappenabschnitts (114) nach dem Anbringen der Membran unter Verwendung des additiven Herstellungsprozesses am ersten Ende (102) der Körperunterbaugruppe, um die Entlüftungs-Baugruppe auszubilden, wobei die Entlüftungs-Baugruppe ein Fenster (110) am ersten Ende (102) definiert, wobei das Fenster in Fluidverbindung mit dem Hohlraum steht.

11. Verfahren nach einem der Ansprüche 9-10, wobei das Anbringen der Membran Wärmeeschweißen, Ultraschallschweißen oder Kleben aufweist.

12. Verfahren zur Herstellung einer Entlüftungs-Baugruppe nach einem der Ansprüche 1-8 aufweisend:
Bilden einer Körperunterbaugruppe unter Verwendung eines 3D-Druckverfahrens, wobei die Körperunterbaugruppe ein erstes Ende (102) und ein zweites Ende (104) mit einer Kopplungsstruktur (108) umfasst, wobei die Körperunterbaugruppe einen Hohlraum (202) definiert; und
Bilden einer atmungsaktiven Entlüftung an der Körperunterbaugruppe unter Verwendung des 3D-Druckverfahrens, wobei die atmungsaktive Entlüftung den Hohlraum (202) überspannt.

13. Verfahren nach Anspruch 12 ferner aufweisend:
Bilden eines Endkappenabschnitts (114) nach dem Bilden der atmungsaktiven Entlüftung unter Verwendung des 3D-Druckverfahrens am ersten Ende (102) der Körperunterbaugruppe, um die Entlüftungs-Baugruppe zu bilden, wobei die Entlüftungs-Baugruppe ein Fenster (110) am ersten Ende (102) definiert, wobei das Fenster (110) in Fluidverbindung mit dem Hohlraum (202) steht.

14. Verfahren nach einem der Ansprüche 12 bis 13, wobei die atmungsaktive Entlüftung eine erste Porosität und die Körperunterbaugruppe eine zweite Porosität aufweist, wobei die erste Porosität höher ist als die zweite Porosität.

15. Verfahren nach einem der Ansprüche 9 bis 14, wobei die Entlüftungs-Baugruppe ferner aufweist:
eine erste Überhangstruktur (408), die sich von einer ersten Seite (404) zu einer zweiten Seite (406) der Entlüftungs-Baugruppe teilweise über die Membran oder die atmungsaktive Entlüftung erstreckt; und
eine zweite Überhangstruktur (410), die sich von der zweiten Seite in Richtung der ersten Seite der Entlüftungs-Baugruppe erstreckt;
wobei die ersten und zweiten Überhangstrukturen (408, 410) einen Strömungsweg (402) von einer Außenseite der Entlüftungs-Baugruppe zu der Membran oder der atmungsaktiven Entlüftung definieren, wobei der Strömungsweg (402) Windungen umfasst, die Winkel von 60-90 Grad bilden.

## Revendications

1. Ensemble d'aération comprenant :
un boîtier (106) définissant une cavité (202), une première extrémité (102) et une deuxième extrémité (104), dans lequel la deuxième extrémité (104) comprend une structure de couplage (108), dans lequel la première extrémité (102) définit une fenêtre (110) en communication fluidique avec la cavité, dans lequel la fenêtre (110) possède un périmètre de fenêtre ;
un moyen d'aération (206) recouvrant la cavité (202) du boîtier (106), dans lequel le moyen d'aération (206) est respirant et forme une fermeture étanche à l'eau sur le boîtier (106) au niveau d'un périmètre du moyen d'aération (206) ;
**caractérisé en ce que** la première extrémité (102) comprend une structure de quadrillage (300) dans le périmètre de fenêtre de la fenêtre (110) comprenant des structures répétées définissant des surfaces ouvertes.

2. Ensemble d'aération selon la revendication 1, dans lequel la structure de quadrillage (300) définit :
une première rangée de premières surfaces ouvertes, au moins une partie des premières surfaces ouvertes ayant une première dimension ;
une deuxième rangée de deuxièmes surfaces ouvertes, au moins une partie des deuxièmes surfaces ouvertes ayant une deuxième dimension différente de la première dimension ; et
une troisième rangée de troisièmes surfaces ouvertes, au moins une partie des troisièmes surfaces ouvertes ayant une troisième dimension différente de la première et de la deuxième dimensions.

3. Ensemble d'aération selon la revendication 2, dans lequel la première dimension, la deuxième dimension et la troisième dimension sont une hauteur des surfaces ouvertes respectives.

4. Ensemble d'aération selon l'une quelconque des revendications 1 à 3, dans lequel la structure de quadrillage (300) définit des rangées de formes répétées de surfaces ouvertes, dans lequel les surfaces ouvertes sont formées comme des rectangles, des cercles, des hexagones, ou des triangles.

5. Ensemble d'aération selon l'une quelconque des revendications 1 à 4, dans lequel la structure de quadrillage (300) comprend une grille d'éléments de séparation comprenant des séparateurs horizontaux et des séparateurs verticaux.

6. Ensemble d'aération selon l'une quelconque des revendications 1 à 5, dans lequel le moyen d'aération (206) est une membrane, dans lequel la membrane est soudée sur une surface d'appui de membrane.

7. Ensemble d'aération selon l'une quelconque des revendications 1 à 6, dans lequel le moyen d'aération (206) présente une porosité de 0,3 µm à 3 µm.

8. Ensemble d'aération selon l'une quelconque des revendications 1 à 7, dans lequel le moyen d'aération (206) et au moins des parties du boîtier (106) sont formés par un processus d'impression 3D.

9. Procédé destiné à former un ensemble d'aération selon l'une quelconque des revendications 1 à 8, comprenant :
la formation d'un sous-ensemble de corps à l'aide d'un procédé de fabrication additive, dans lequel le sous-ensemble de corps comprend une première extrémité (102), une deuxième extrémité (104) comprenant une structure de couplage (108), et une surface d'appui de membrane, dans lequel le sous-ensemble de corps définit une cavité (202) et la surface d'appui de membrane entoure la cavité (202) ; et
la fixation d'une membrane sur la surface d'appui de membrane afin de former une fermeture étanche à l'eau (112).

10. Procédé selon la revendication 9, comprenant en outre :
la formation, après la fixation de la membrane, d'une partie d'embout (114) à l'aide du procédé de fabrication additive au niveau de la première extrémité (102) du sous-ensemble de corps afin de former l'ensemble d'aération, dans lequel l'ensemble d'aération définit une fenêtre (110) au niveau de la première extrémité (102), dans lequel la fenêtre est en communication fluidique avec la cavité.

11. Procédé selon l'une quelconque des revendications 9 à 10, dans lequel la fixation de la membrane comprend une thermosoudure, un soudage par ultrasons, ou une fixation par collage.

12. Procédé destiné à former un ensemble d'aération selon l'une quelconque des revendications 1 à 8, comprenant :
la formation d'un sous-ensemble de corps à l'aide d'un processus d'impression 3D, dans lequel le sous-ensemble de corps comprend une première extrémité (102), une deuxième extrémité (104) comprenant une structure de couplage (108), dans lequel le sous-ensemble de corps définit une cavité (202) ; et
la formation d'un évent respirant sur le sous-ensemble de corps à l'aide du processus d'impression 3D, dans lequel l'évent respirant recouvre la cavité (202).

13. Procédé selon la revendication 12, comprenant en outre :
la formation, après formation de l'évent respirant, d'une partie d'embout (114) à l'aide du processus d'impression 3D au niveau de la première extrémité (102) du sous-ensemble de corps afin de former l'ensemble d'aération, dans lequel l'ensemble d'aération définit une fenêtre (110) au niveau de la première extrémité (102), dans lequel la fenêtre (110) est en communication fluidique avec la cavité (202).

14. Procédé selon l'une quelconque des revendications 12 à 13, dans lequel l'évent respirant présente une première porosité et le sous-ensemble de corps présente une deuxième porosité, dans lequel la première porosité est supérieure à la deuxième porosité.

15. Procédé selon l'une quelconque des revendications 9 à 14 dans lequel l'ensemble d'aération comprend en outre :
une première structure en porte à faux (408) s'étendant d'un premier côté (404) vers un deuxième côté (406) de l'ensemble d'aération par-dessus la membrane ou l'évent respirant ; et
une deuxième structure en porte à faux (410) s'étendant du deuxième côté vers le premier côté de l'ensemble d'aération ;
dans lequel la première et la deuxième structures en porte à faux (408, 410) définissent un trajet d'écoulement (402) entre un extérieur de l'ensemble d'aération et la membrane ou l'évent respirant, dans lequel le trajet d'écoulement (402) comprend des courbes formant des angles de 60 à 90 degrés.
